# EUROPEAN PATENT SPECIFICATION

(11) **EP 3 677 813 B1**
(45) Date of publication and mention of the grant of the patent: **01.03.2023**
(21) Application number: 18849978.4
(22) Date of filing: 30.08.2018
(51) Int. Cl.: F16H 1/16, F16H 57/039, B62D 5/04, F16H 55/24, F16H 57/12, F16H 57/022, F16H 57/021, F16C 35/077

(54) **WORM REDUCER**
SCHNECKENREDUKTIONSGETRIEBE
RÉDUCTEUR À VIS SANS FIN

(30) Priority: 31.08.2017 JP 2017167675
(43) Date of publication of application: 08.07.2020
(73) Proprietor: NSK Ltd., Tokyo 141-8560 (JP)
(72) Inventor: SEGAWA, Toru, Maebashi-shi Gunma 371-8527 (JP)
(74) Representative: Mewburn Ellis LLP
(86) International application number: PCT/JP2018/032270
(87) International publication number: WO 2019/045023

(56) References cited:
- EP-A1- 3 192 719
- WO-A1-2016/047189
- WO-A1-2016/181871
- WO-A1-2018/016493
- DE-A1-102010 003 727
- JP-A- 2001 010 512
- US-A1- 2013 291 671

## Description

### TECHNICAL FIELD

The present invention relates to a worm reduction gear used to be incorporated into, for example, an electric power steering apparatus.

### BACKGROUND ART

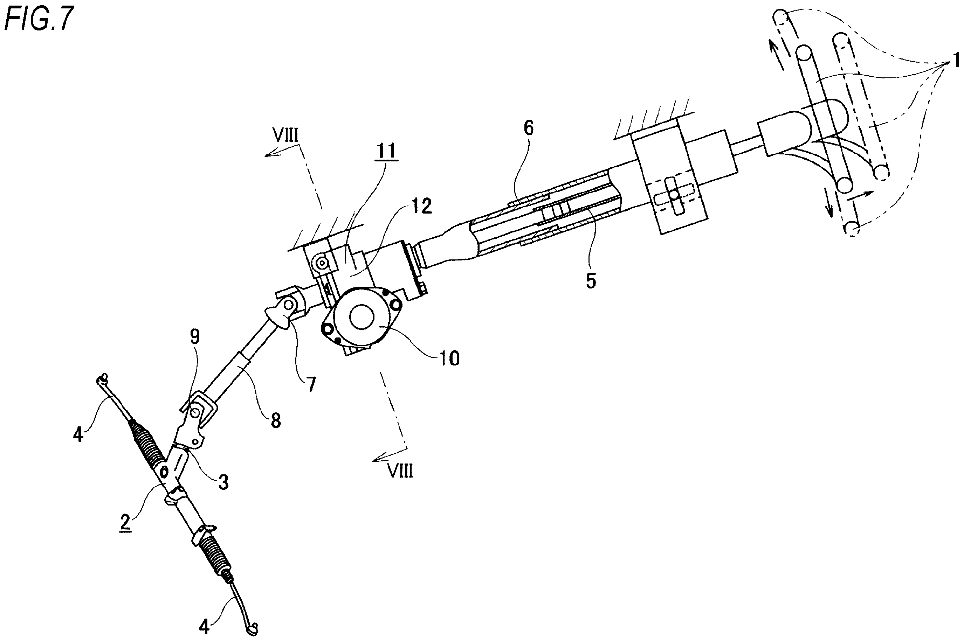

Fig. 7 illustrates an example of a conventional structure of a steering apparatus for an automobile. Rotation of a steering wheel 1 is transmitted to an input shaft 3 of a steering gear unit 2, and along the rotation of the input shaft 3, a pair of right and left tie rods 4 are pushed and pulled, thereby imparting a steering angle to front wheels. The steering wheel 1 is supported and fixed to a rear end portion of a steering shaft 5 and the steering shaft 5 is rotatably supported by a steering column 6 in a state of being axially inserted into the cylindrical-shaped steering column 6. A front end portion of the steering shaft 5 is connected to a rear end portion of an intermediate shaft 8 via a universal joint 7 and a front end portion of the intermediate shaft 8 is connected to the input shaft 3 via another universal joint 9.

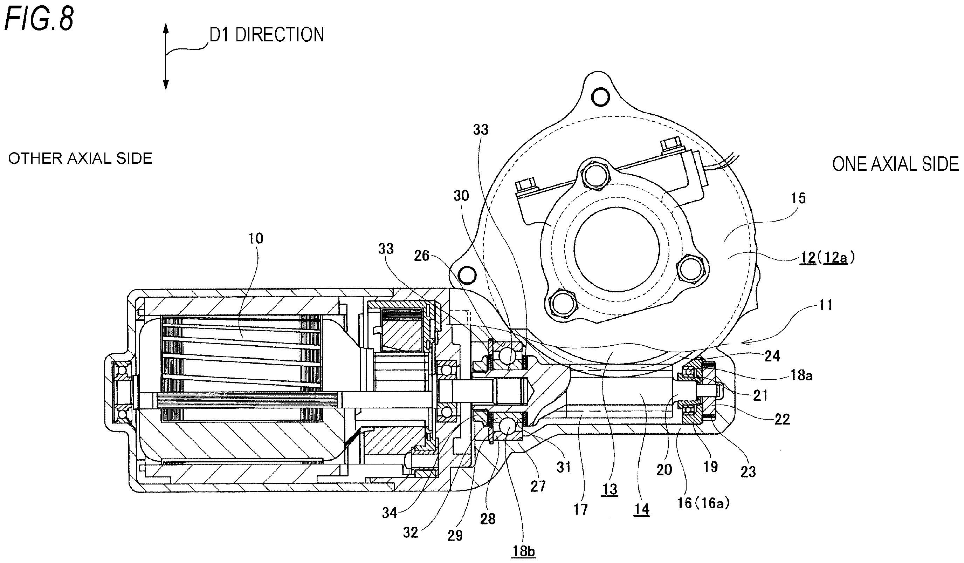

In an example illustrated in the drawings, an electric power steering apparatus which reduces a force required for operating the steering wheel 1 by using an electric motor 10 as an auxiliary power source is incorporated. Although a speed reducer is incorporated in the electric power steering apparatus, a worm reduction gear having a large lead angle and reversibility in a power transmission direction is generally used as the speed reducer. Fig. 8 illustrates an example of a conventional structure of a worm reduction gear disclosed in Japanese Patent No. 4381024. The worm reduction gear 11 includes a housing 12, a worm wheel 13, and a worm 14.

The housing 12 is supported and fixed to the electric motor 10 and includes a wheel accommodation portion 15 and a worm accommodation portion 16 which is located at a twisted position with respect to the wheel accommodation portion 15 and has an axially intermediate portion opened in the wheel accommodation portion 15. The worm wheel 13 has a wheel tooth 24 on an outer peripheral surface thereof and is supported and fixed coaxially with the steering shaft 5 at a portion near a front end of the steering shaft 5 (see Fig. 7) which is a driven shaft rotatably supported inside the wheel accommodation portion 15.

The worm 14 has a worm tooth 17 meshing with the wheel tooth 24 on an outer peripheral surface of an axially intermediate portion. The worm 14 is rotatably supported inside the worm accommodation portion 16 by a pair of rolling bearings 18a and 18b such as deep-groove-type ball bearings at two positions in an axial direction interposing the worm tooth 17. In the pair of rolling bearings 18a and 18b, an outer ring of the rolling bearing 18a on a tip end side of the worm 14 is press-fitted into a holder 19 internally fitted in the inside of a portion near a rear end of the worm accommodation portion 16 in a tight-fit manner. In addition, an inner ring of the rolling bearing 18a on the tip end side of the worm 14 is externally fitted to a large diameter portion 20 provided at a portion near the tip end of the worm 14 and separated from the worm tooth 17 via a bush 21 made of an elastic material. On the other hand, an outer ring of the rolling bearing 18b on a base end side of the worm 14 is press-fitted into an opening portion of the worm accommodation portion 16 and an inner ring of the rolling bearing 18b on the base end side of the worm 14 is externally fitted to a base end portion of the worm 14 in a clearance-fit manner. In the worm 14, the output shaft of the electric motor 10 which is a drive shaft is connected to the base end portion (left end portion in Fig. 8). That is, the worm 14 can be rotationally driven by the electric motor 10.

In the worm reduction gear 11 of the related art, an inevitable backlash exists in a meshing portion between the wheel tooth 24 and the worm tooth 17 based on dimensional errors and assembly errors of each member constituting the worm reduction gear 11. Due to the existence of the backlash, when a rotation direction of the steering shaft 5 is changed, unpleasant gear rattle noise may be generated at a meshing portion. On the contrary, in the illustrated example, a minute gap is provided between an inner peripheral surface of the inner ring of the rolling bearing 18b on the base end side and the outer peripheral surface of the base end portion of the worm 14 and the base end portion of the worm 14 is supported to be capable of slight swinging displacement with respect to the worm accommodation portion 16. A minute gap is provided between the outer peripheral surface of the large diameter portion 20 provided in the portion near the tip end of the worm 14 and an inner peripheral surface of the bush 21. A preload pad 22 made of synthetic resin is externally fitted to the tip end portion of the worm 14 in a tight-fit manner and a torsion coil spring 23 is provided between the preload pad 22 and the holder 19. By the torsion coil spring 23, the tip end portion of the worm 14 is elastically pressed toward the worm wheel 13 (upper side in Fig. 8) in a first direction D1 (up-down direction in Fig. 8) which is the direction perpendicular to a center axis of the output shaft of the electric motor 10 and a center axis of the worm 14 via the preload pad 22. As a result, the backlash between the wheel tooth 24 and the worm tooth 17 is reduced, and therefore the generation of gear rattle noise can be reduced. However, there is room for improvement from a viewpoint of more effectively reducing the generation of the gear rattle noise at the meshing portion between the worm tooth 17 and the wheel tooth 24. Especially, even when tooth flanks of the wheel tooth and the worm tooth are worn, it is required to more effectively reduce the generation of the gear rattle noise at the meshing portion.

Patent Document 2, on which the invention is based, discloses a support for a worm wheel in the steering gear of a steering system. In the arrangement of Patent Document 2 a spring element is integrated and arranged within a guide bush such that ends of the spring element are respectively engaged at the guide bush and an eccentric bush.

Patent Document 3, which is prior art in accordance with Article 54(3) EPC, discloses a worm reduction gear which permits displacement of a bearing in a direction orthogonal to the center axis of the worm wheel and the center axis of the worm.

### RELATED ART REFERENCES

### PATENT DOCUMENT

Patent Document 1: Japanese Patent No. 4381024
Patent Document 2: DE 10 2010 003727 A1
Patent Document 3: WO 2018/016493 A1

### SUMMARY OF THE INVENTION

### PROBLEMS TO BE SOLVED BY THE INVENTION

In view of circumstances described above, an object of the invention is to realize a structure of reduced axial dimension and capable of more effectively reducing the generation of gear rattle noise at a meshing portion between a wheel tooth and a worm tooth.

### MEANS FOR SOLVING THE PROBLEMS

A worm reduction gear of the invention is as set out in claim 1.

For example, a rolling bearing which includes an outer ring having an outer ring raceway on an inner peripheral surface thereof, an inner ring having an inner ring raceway on an outer peripheral surface thereof, and rolling elements rollingly disposed between the outer ring raceway and the inner ring raceway can be used as the bearing. When the rolling bearing is used as the bearing, more specifically, a radial ball bearing, a radial roller bearing, a radial tapered roller bearing, and the like can be used. Alternatively, a sliding bearing may be used as the bearing.

As defined in claim 1, an outer peripheral surface of the guide member has a cylindrical surface shape and be eccentric with respect to a center axis of the guide-side holding surface.

As defined in claim 1, an eccentric direction of a center axis of the holder-side held surface with respect to a center axis of the holder-side holding surface and an eccentric direction of a center axis of an outer peripheral surface of the guide member with respect to a center axis of the guide-side holding surface are opposite to each other, and an amount of eccentricity of the center axis of the holder-side held surface with respect to the center axis of the holder-side holding surface and an amount of eccentricity of the center axis of the outer peripheral surface of the guide member with respect to the center axis of the guide-side holding surface are the same.

The first elastic urging member can be a torsion coil spring.

A second elastic urging member for elastically urging the guide member toward the worm wheel side can be further provided. In this case, the second elastic urging member can be a leaf spring.

A preload can be applied to the bearing by spring loads of the first elastic urging member and the second elastic urging member which act during operation of the worm reduction gear.

Rotation of the guide member relative to the housing can be restricted by concavo-convex engagement of a housing-side engagement portion provided in the housing with a guide-side engagement portion provided in the guide member.

### ADVANTAGES OF THE INVENTION

According to a worm reduction gear of the invention as described above, it is possible to reduce the axial dimension of the gear and more effectively reduce the generation of gear rattle noise at a meshing portion between a wheel tooth and a worm tooth.

### BRIEF DESCRIPTION OF THE DRAWINGS

Fig. 1 is a cross-sectional view of a main part illustrating a worm reduction gear according to an example of embodiments of the invention.
Fig. 2 is an end view illustrating a state as seen from a left side at a position of the line II-II in Fig. 1 with a cover removed.
Fig. 3 is an end view illustrating a state as seen from a right side at a position of the line III-III in Fig. 1 with an urging mechanism removed.
Fig. 4 is an exploded perspective view in a state where the urging mechanism and a rolling bearing on a tip end side are removed.
Fig. 5 is a perspective view of a guide member as seen from a rear side in Fig. 4.
Fig. 6A is an end view in a state where the urging mechanism and the rolling bearing on the tip end side are removed and Fig. 6B is an end view illustrating a state where the rolling bearing on the tip end side is pressed against a worm wheel side by the urging mechanism.
Fig. 7 is a partially cutaway side view illustrating an example of a steering apparatus of a structure of the related art.
Fig. 8 is an enlarged cross-sectional view taken along the line VIII-VIII in Fig. 7.

### MODES FOR CARRYING OUT THE INVENTION

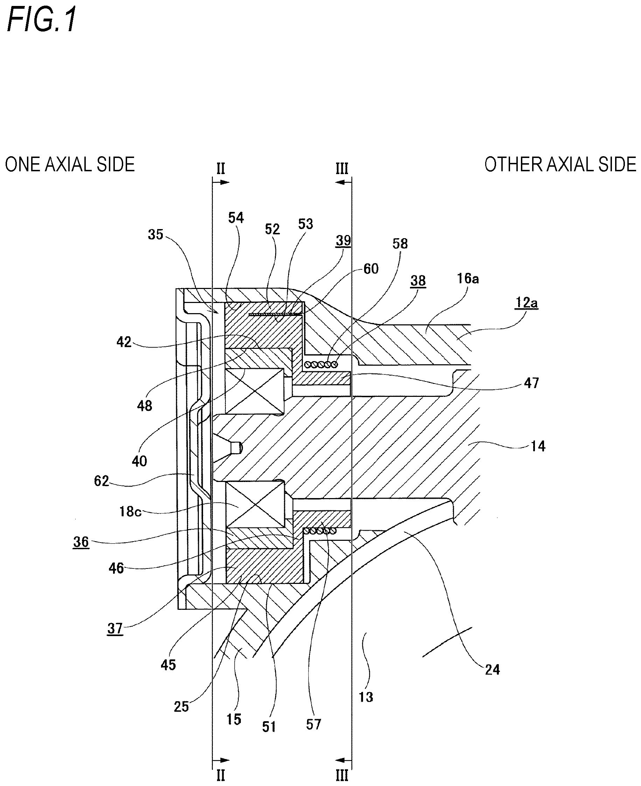

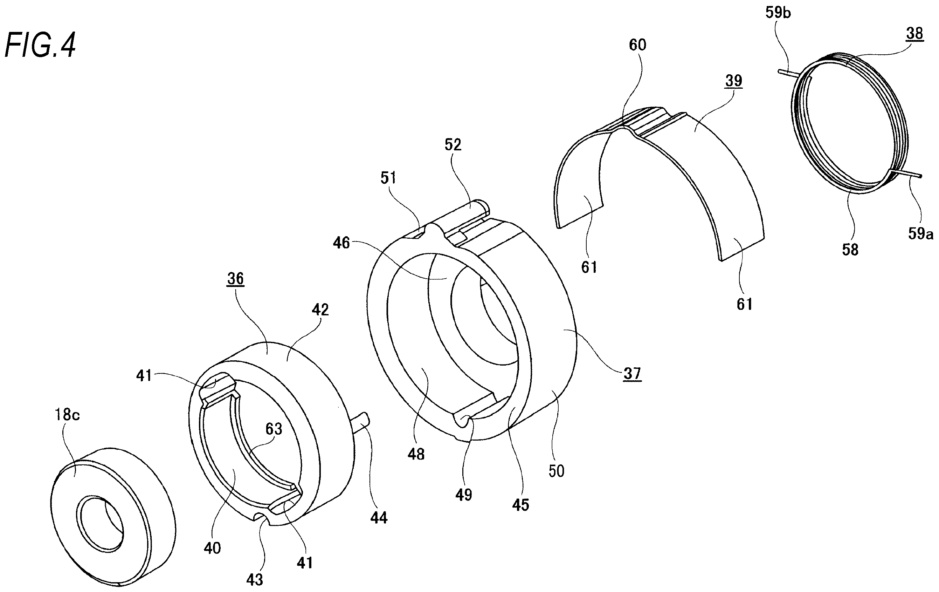

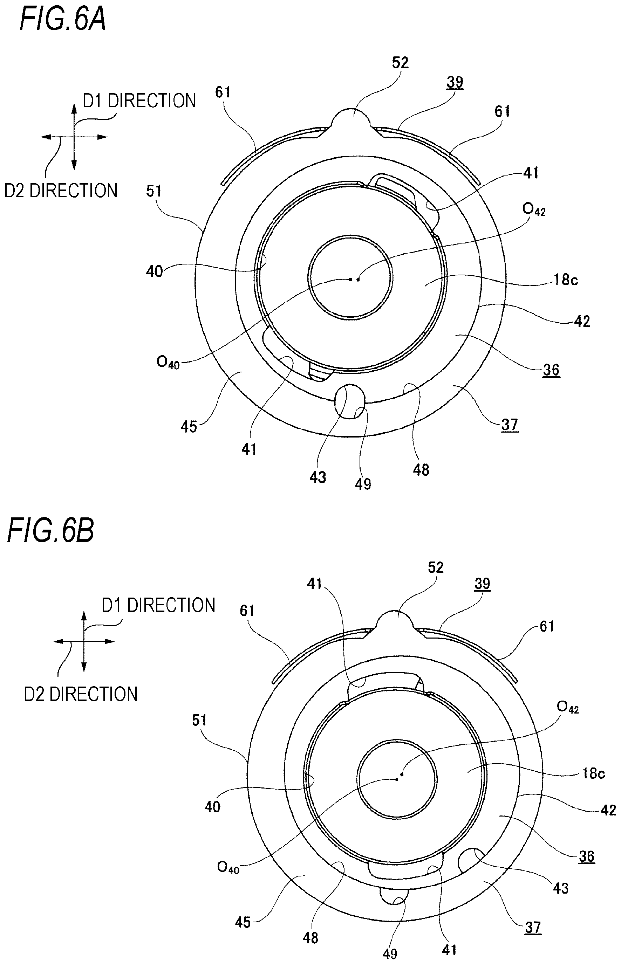

Figs. 1 to Figs. 6A and 6B illustrate an example of embodiments of the invention. As similar to the worm reduction gear 11 of a structure of the related art illustrated in Fig. 8, a worm reduction gear of the present example includes a housing 12a, a worm wheel 13, and a worm 14. The housing 12a includes a wheel accommodation portion 15 and a worm accommodation portion 16a which is provided at a position twisted with respect to the wheel accommodation portion 15 and has an axially intermediate portion opened in the wheel accommodation portion 15. In the worm accommodation portion 16a, a guide holding portion 25 of a cylindrical surface shape is provided on an inner peripheral surface of one axial end portion (left end portion in Fig. 1). In the guide holding portion 25, a housing-side engagement portion 54 which is a concave portion having a circular cross-section and recessed in a radially outward direction is provided in a portion located on a side opposite to the wheel accommodation portion 15 in a radial direction.

The worm wheel 13 has a wheel tooth 24 on an outer peripheral surface and is coaxially supported and fixed to a steering shaft 5 at a portion near a front end of the steering shaft 5 (see Fig. 7), which is a driven shaft rotatably supported inside the wheel accommodation portion 15. For example, a worm wheel formed by joining and fixing a wheel tooth 24 made of a synthetic resin around a disc-shaped member made of a metal material can be used as the worm wheel 13. Alternatively, the entirety of the worm wheel 13 may be made of a metallic material or a synthetic resin.

The worm 14 is made of a metallic material and a base end portion thereof is connected to an output shaft of the electric motor 10 to be able to transmit torque in a state where a worm tooth 17 provided in an axial intermediate portion meshes with the wheel tooth 24. The worm 14 is rotatably supported to the worm accommodation portion 16a of the housing 12a to be capable of swinging displacement about the base end portion. Therefore, a pair of rolling bearings 18b and 18c are externally fitted at a part of the worm 14 which is the part at two positions on both axial sides interposing the worm tooth 17. Each of the pair of rolling bearings 18b and 18c is constituted of a radial ball bearing, a radial roller bearing, a radial tapered roller bearing of the single row deep groove type, or the like.

A specific structure for rotatably supporting the worm 14 to the worm accommodation portion 16a to be capable of swinging displacement about the base end portion will be described with reference to Fig. 8 related to the related art. A bearing fitting portion 26 is provided in an opening portion of the worm accommodation portion 16a and a housing-side step portion 27 facing the other axial side is provided on one axial end portion (right end portion in Fig. 8) of the bearing fitting portion 26. One axial side surface of an outer ring 28 constituting the rolling bearing 18b on a base end side abuts on the housing-side step portion 27 and an outer peripheral surface of the outer ring 28 is internally fitted into the bearing fitting portion 26 in a tight-fit manner. One axial side surface of a snap ring 29 which is engaged with a part of the opening portion of the worm accommodation portion 16a which is a portion adjacent to the other axial side of the bearing fitting portion 26 abuts on the other axial side surface (left side surface in Fig. 8) of the outer ring 28, and, therefore, the axial displacement of the outer ring 28 is restricted. A small diameter portion 30 is provided at the base end portion of the worm 14 and a worm-side step portion 31 facing the other axial side is provided at one axial end portion of the small diameter portion 30. One axial side surface of an inner ring 32 constituting the rolling bearing 18b on the base end side abuts on the worm-side step portion 31 via an elastic body 33 such as a disc spring and an inner peripheral surface of the inner ring 32 is fitted over the small diameter portion 30 in a clearance-fit manner. On the other axial side surface of the inner ring 32, a tip end surface (one axial side surface) of a nut 34 threadedly engaged with the other axial end portion of the small diameter portion 30 abuts via the elastic body 33. In other words, the inner ring 32 is elastically interposed between the worm-side step portion 31 and the nut 34 via a pair of elastic bodies 33 in a state where the inner ring 32 is externally fitted to the small diameter portion 30 in a clearance-fit manner. Therefore, the base end portion of the worm 14 is supported by the opening portion of the worm accommodation portion 16a via the rolling bearing 18b on the base end side.

However, the structure for supporting the worm 14 to the worm accommodation portion 16a to be capable of swinging displacement about the base end portion is not limited to the structure of this example. That is, for example, by enlarging an internal clearance of the rolling bearing 18b on the base end side, the worm 14 can be configured to be capable of swinging displacement about the base end portion. Alternatively, the output shaft of the electric motor 10 and the base end portion of the worm 14 may be connected via a joint having an elastic member elastically deformable in the radial direction without providing a bearing around the base end portion of the worm 14.

The tip end portion (left end portion in Fig. 1) of the worm 14 is supported on the inner diameter side of the guide holding portion 25 of the worm accommodation portion 16a by means of the rolling bearing 18c on the tip end side to be able to rotate and slightly move toward or away from the worm wheel 13. The inner ring constituting the rolling bearing 18c on the tip end side is externally fitted and fixed to the tip end portion of the worm 14 in a tight-fit manner. However, the inner ring of the rolling bearing 18c on the tip end side can also be loosely externally fitted to the tip end portion of the worm 14 so as not to rattle in the radial direction.

An urging mechanism 35 for elastically pressing the tip end portion of the worm 14 toward the worm wheel 13 (lower side in Figs. 1 to 3, 6A, and 6B) in a first direction D1 (vertical direction in Figs. 1 to 3, 6A, and 6B) perpendicular to a center axis of the output shaft of the electric motor 10 and a center axis of the worm wheel 13 is provided between the outer ring of the rolling bearing 18c on the tip end side and the guide holding portion 25 of the worm accommodation portion 16a. The urging mechanism 35 includes a holder member 36, a guide member 37, a torsion coil spring 38 as a first elastic urging member, and a leaf spring 39 as a second elastic urging member.

The holder member 36 is made of a synthetic resin or a light alloy such as an aluminum alloy or a magnesium alloy and the entirety of the holder member 36 is formed in a substantially cylindrical shape. The holder member 36 has a holder-side holding surface 40 for internally fitting and holding the rolling bearing 18c on the tip end side, on the inner peripheral surface and has an inward flange portion 63 bent inward in the radial direction from the other axial end portion of the holder-side holding surface 40. In this example, by making a part near the outer diameter side of the other axial side surface of the outer ring of the rolling bearing 18c on the tip end side abut against the inward flange portion 63, positioning the rolling bearing 18c on the tip end side with respect to the holder member 36 in the axial direction is achieved and the outer peripheral surface of the outer ring is internally fitted into the holder-side holding surface 40 in a tight-fit manner. Further, in this example, by providing recess portions 41 having a substantially rectangular cross-section recessed radially outward at two radially opposite positions of the holder-side holding surface 40, the outer ring of the rolling bearing 18c on the tip end side is easily press-fitted to the holder-side holding surface 40.

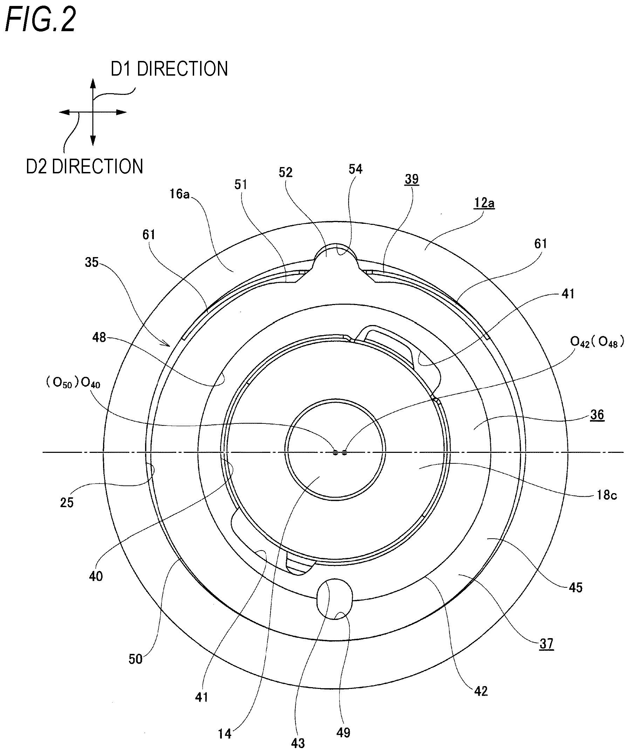

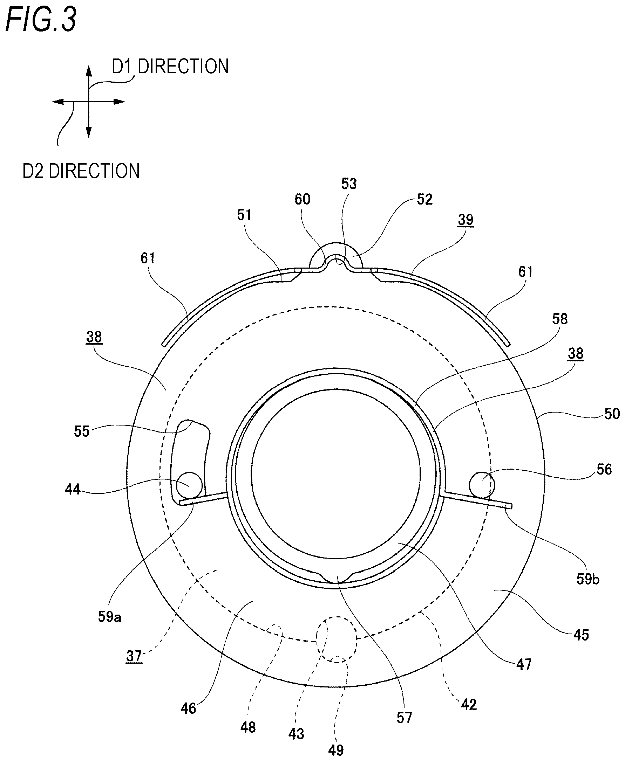

The holder member 36 has a holder-side held surface 42 having a center axis O₄₂ eccentric to a center axis O₄₀ of the holder-side holding surface 40, on the outer peripheral surface. The holder-side held surface 42 has a holder-side marker portion 43 which is a recess portion of a semicircular arc cross section in a radially inwardly recessed at one position in a peripheral direction. In this example, the holder-side marker portion 43 is provided at one end portion (lower end portion in Figs. 2 and 3) of the holder-side held surface 42 which is the end portion in relation to a direction perpendicular to an eccentric direction of the center axis O₄₂ of the holder-side held surface 42 with respect to the center axis O₄₀ of the holder-side holding surface 40.

Further, the holder member 36 has a displacement-side pin portion 44 provided to protrude from one position in the peripheral direction on the other axial side surface to the other axial side.

The guide member 37 is made of a synthetic resin or a light alloy such as an aluminum alloy or a magnesium alloy and includes an outer diameter-side tube portion 45, a side plate portion 46, and an inner diameter-side tube portion 47. The outer diameter-side tube portion 45 is formed in a substantially cylindrical shape. The outer diameter-side tube portion 45 has a guide-side holding surface 48 for internally fitting and holding the holder member 36, on an inner peripheral surface and has a guide-side held surface 50 having a center axis O₅₀ eccentric to a center axis O₄₈ of the guide-side holding surface 48, on an outer peripheral surface. The guide-side holding surface 48 has a guide-side marker portion 49 which is a recess portion having a semicircular cross-section and recessed radially inwardly at one position in the circumferential direction. In this example, the guide-side marker portion 49 is provided at one end portion (lower end portion in Figs. 2 and 3) of the guide-side holding surface 48, which is which is the end portion in relation to a direction perpendicular to an eccentric direction of the center axis O₅₀ of the guide-side held surface 50 with respect to the center axis O₄₈ of the guide-side holding surface 48.

The guide-side holding surface 48 holds the holder member 36 to be capable of swinging about the center axis O₄₂ of the holder-side held surface 42. That is, an inner diameter of the guide-side holding surface 48 is set to be slightly larger than an outer diameter of the holder-side held surface 42.

Further, the outer diameter-side tube portion 45 has a notch portion 51 in a part of the outer peripheral surface, which is a portion (upper-end portion in Figs. 2 and 3) located on an opposite side to the guide-side marker portion 49 in the radial direction. In one axial side portion of the notch portion 51, the base end portion of a holding pin portion 52 having a semicircular shape as seen from the axial direction is supported. A slit 53 is provided between the inner surface of the tip end portion (the other axial half portion) of the holding pin portion 52 and the other axial side portion of the notch portion 51. In other words, the inner surface of the tip end portion of the holding pin portion 52 and the other axial side portion of the notch portion 51 face each other via the slit 53 which is a minute gap in the radial direction. In the example, the cross-sectional shape of the slit 53 has a waveform along a base portion 60 of a leaf spring 39 described below.

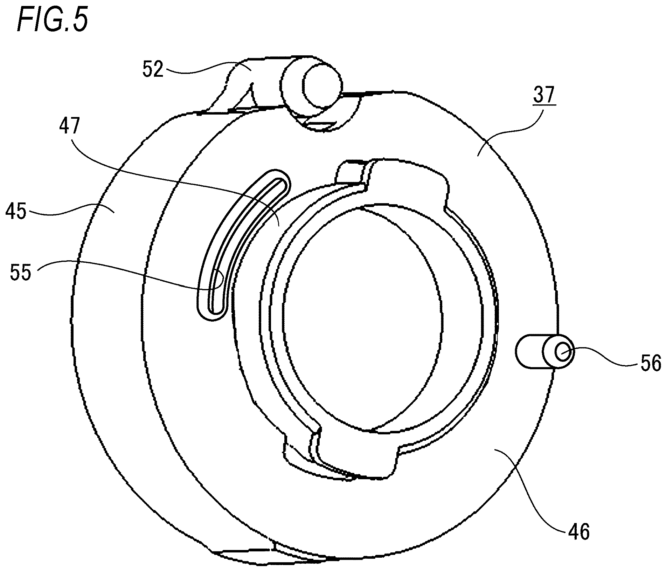

The side plate portion 46 has a circular ring shape and is provided to extend radially inwardly from the other axial side edge of the outer diameter-side tube portion 45. At one position in the circumferential direction of the side plate portion 46, a through hole 55 of a partial-arc shape is provided for inserting the displacement-side pin portion 44. With such a configuration, a tip end portion of the displacement-side pin portion 44 protrudes from the other axial side surface of the side plate portion 46 through the through hole 55 in a state where the holder member 36 is internally fitted and held in the guide-side holding surface 48. Also, referring also to Fig. 5, a stationary-side pin portion 56 is provided to protrude in the other axial direction at a part of the other axial side surface of the side plate portion 46, which is a portion located substantially opposite to the through hole 55 in the radial direction.

The inner diameter-side tube portion 47 has a substantially cylindrical shape and is provided to extend from the inner peripheral edge of the side plate portion 46 to the other axial side. The inner diameter-side tube portion 47 has a positioning convex portion 57 protruding outward in the radial direction in a part of the outer peripheral surface, which is a portion where the phase in relation to the circumferential direction coincides with the engagement portion between the worm tooth 17 and the wheel tooth 24.

By loosely engaging the holding pin portion 52 and the housing-side engagement portion 54 on the inner diameter side of the guide holding portion 25 of the housing 12a, the guide member 37 is internally fitted to be able to move toward or away from the engagement portion between the worm tooth 17 and the wheel tooth 24 in a state of substantially preventing rotation with respect to the guide holding portion 25 to the extent of not obstructing the movement toward or away from the engagement portion. That is, in this example, the holding pin portion 52 also functions as a guide side engaging portion and engages with the housing-side engagement portion 54 in a concavo-convex manner. Also, in this example, by making the inner diameter of the guide holding portion 25 larger than the outer diameter of the guide-side held surface 50, the guide member 37 can move toward or away from the worm wheel 13 in relation to the first direction D1 on the inner diameter side of the guide holding portion 25. However, the shape of the guide holding portion 25 is not limited to a cylindrical surface shape as long as the guide member 37 can be internally fitted to be able to move toward or away from the worm wheel 13 in relation to the first direction D1. Further, the shape of the guide holding portion 25 may be an elliptical shape or an oblong oval shape or may be a rectangular tube shape, or the like when viewed from the axial direction.

The torsion coil spring 38 is formed by bending a metal wire and includes a coil portion 58 and a pair of arm portions 59a and 59b. In the coil portion 58, the inner diameter-side tube portion 47 of the guide member 37 is inserted. The arm portion 59a of the pair of arm portions 59a and 59 is pressed against the displacement-side pin portion 44 of the holder member 36 and the other arm portion 59b is pressed against the stationary-side pin portion 56 of the guide member 37. When the displacement-side pin portion 44 is elastically pressed in the circumferential direction by one arm portion 59a, the holder member 36 is elastically urged in a rotating direction (counterclockwise in Fig. 2, clockwise in Fig. 3) with respect to the guide member 37 by one arm portion 59a. In a state where the torsion coil spring 38 exerts elasticity, the tip end portion of the positioning convex portion 57 of the inner diameter-side tube portion 47 abuts on the inner peripheral surface of the coil portion 58. In other words, positioning the abutting portion between the outer peripheral surface of the inner diameter-side tube portion 47 and the inner peripheral surface of the coil portion 58 is achieved by the positioning convex portion 57. Further, the circumferential phase in which the positioning convex portion 57 is provided is the direction in which the guide member 37 is urged by the torsion coil spring 38 and accordingly, the positioning convex portion 57 can ascertain the direction in which the guide member 37 is urged.

The leaf spring 39 is made of an elastic metal plate and includes a base portion 60 of a corrugately curved shape and a pair of arm portions 61 of a partially cylindrical shape which extend circumferentially from both side edges of the base portion 60. The leaf spring 39 is supported against the guide member 37 by inserting the base portion 60 into the slit 53 of the guide member 37.

The curvature of the pair of arm portions 61 in a free state before assembling the urging mechanism 35 to the inner diameter side of the guide holding portion 25 is smaller than that of the guide holding portion 25. Therefore, in a state where the urging mechanism 35 is assembled to the inner diameter side of the guide holding portion 25, both circumferential end portions of the pair of arm portions 61 are pressed against the inner peripheral surface of the guide holding portion 25. Also, in the guide-side held surface 50 of the guide member 37, an end portion on the side (lower side in Fig. 2) close to the worm wheel 13 in the first direction D1 is elastically pressed against the guide holding portion 25. As a result, in a portion between the guide-side held surface 50 and the guide holding portion 25, a gap for allowing the guide member 37 to displace based on a meshing reaction force applied to the worm 14 during operation of the worm reduction gear is provided at an end portion on the side (upper side in Fig. 2) far from the worm wheel 13 in the first direction D 1. With such a configuration, based on the meshing reaction force applied to the worm 14 from the meshing portion between the wheel tooth 24 and the worm tooth 17, the tip end portion of the worm 14 can be displaced in a direction away from the worm wheel 13 in the first direction D 1. When the tip end portion of the worm 14 is displaced in the direction away from the worm wheel 13 in the first direction D1, the leaf spring 39 applies a force (elastic force) to elastically press the tip end portion of the worm 14 toward the worm wheel 13 in the first direction D1 with respect to the tip end portion of the worm 14. Further, the spring constant of the leaf spring 39 is set to be sufficiently small. The curvature of the pair of arm portions 61 may be smaller or greater than that of the guide holding portion 25 as long as the tip end portion of the worm 14 can be urged by the leaf spring 39 to displace in the direction away from the worm wheel 13 in the first direction D1. Also, the length of the pair of arm portions 61 is arbitrarily set as long as the tip end portion of the worm 14 can be urged by the leaf spring 39 to displace in the direction away from the worm wheel 13 in the first direction D1.

The urging mechanism 35 having such a configuration is assembled to the inner diameter side of the guide holding portion 25 as follows. First, the outer ring of the rolling bearing 18c on the tip end side is internally fitted and held in the holder-side holding surface 40 of the holder member 36 by press-fitting. Next, the holder-side held surface 42 of the holder member 36 is internally fitted and held in the guide-side holding surface 48 of the guide member 37 in a state where the phases of the holder-side marker portion 43 and the guide-side marker portion 49 in the circumferential direction are matched. The tip end portion of the displacement-side pin portion 44 protrudes from the other axial side surface of the side plate portion 46 through the through hole 55. Further, in a free state where an urging force is not applied to the torsion coil spring 38 or in a state where the displacement-side pin portion 44 abuts on an end portion on an advancing side in a counterclockwise direction of the through hole 55 illustrated in Fig. 3, the holder-side marker portion 43 of the holder member 36 is located on the advancing side in a clockwise direction with respect to the guide-side marker portion 49 of the guide member 37. On the contrary, in a state where the phases of the holder-side marker portion 43 and the guide-side marker portion 49 in the circumferential direction are made to coincide with each other, the center axis O₄₂ of the holder-side held surface 42 with respect to the center axis O₄₀ of the holder-side holding surface 40 are horizontal along a second direction D2 (right-left direction in Figs. 2, 3, 6A and 6B). In this example, the eccentric direction (right direction in Fig. 2) of the center axis O₄₂ of the holder-side held surface 42 with respect to the center axis O₄₀ of the holder-side holding surface 40 and the eccentric direction (left direction in Fig. 2) of the center axis O₅₀ of the guide-side held surface 50 with respect to the center axis O₄₈ of the guide-side holding surface 48 are opposite to each other and the amount of eccentricity of the center axis O₄₂ of the holder-side held surface 42 with respect to the center axis O₄₀ of the holding surface 40 and the amount of eccentricity of the center axis O₅₀ of the guide-side held surface 50 with respect to the center axis O₄₈ of the guide-side holding surface 48 are the same.

Next, the base portion 60 of the leaf spring 39 is press-fitted into the slit 53 of the guide member 37 to support the leaf spring 39 with respect to the guide member 37. In addition, the inner diameter-side tube portion 47 is inserted into the coil portion 58 of the torsion coil spring 38 and the pair of arm portions 59a and 59b are respectively pressed against the displacement-side pin portion 44 and the stationary-side pin portion 56. Next, while the holding pin portion 52 and the housing-side engagement portion 54 are engaged, the guide-side held surface 50 of the guide member 37 is internally fitted in the guide holding portion 25 of the housing 12a and the tip end portion of the worm 14 is press-fitted into the inner ring of the rolling bearing 18c on the tip end side. After, in this manner, the rolling bearing 18c on the tip end side and the urging mechanism 35 are assembled between the tip end portion of the worm 14 and the guide holding portion 25 of the housing 12a, in this example, one axial end portion of the housing 12a is covered with the cover 62.

The order of assembling the rolling bearing 18c on the tip end side and the urging mechanism 35 can be switched or executed at the same time as long as there is no inconsistency. Specifically, for example, after the inner ring of the rolling bearing 18c on the tip end side is press-fitted into the tip end portion of the worm 14, the urging mechanism 35 may be assembled between the rolling bearing 18c on the tip end side and the guide holding portion 25.

In the worm reduction gear of this example, the center axis O₄₂ of the holder-side held surface 42 which is the outer peripheral surface of the holder member 36 is eccentric to the center axis O₄₀ of the holder-side holding surface 40 which is the inner peripheral surface, in a right direction in Fig. 2. Therefore, a force for elastically urging the holder member 36 in a direction to rotate with respect to the guide member 37 can be converted to a force for elastically urging the tip end portion of the worm 14 toward the worm wheel 13 in the first direction D1 by the torsion coil spring 38. In other words, when the holder member 36 rotates counterclockwise in Fig. 2 with respect to the guide member 37 by the elasticity of the torsion coil spring 38, the center axis O₄₀ of the holder-side holding surface 40 is displaced in a counterclockwise direction about the center axis O₄₂ of the holder-side held surface 42 as illustrated in Figs.6A→ 6B. As a result, the thickness of a part of the holder member 36, which is located at the end portion on the side close to the meshing portion in the radial direction, becomes small. Further, the tip end portion of the worm 14 which is internally fitted and held in the holder-side holding surface 40 is elastically urged toward the worm wheel 13 in the first direction D1.

In this example, the elasticity of the torsion coil spring 38 is adjusted to prevent the meshing resistance at the meshing portion between the worm tooth 17 and the wheel tooth 24 from becoming excessively large. Based on the elasticity of the torsion coil spring 38, the force for elastically pressing the tip end portion of the worm 14 toward the worm wheel 13 in the first direction D1 is made sufficiently small.

According to the worm reduction gear of this example, the backlash at the meshing portion between the worm tooth 17 and the wheel tooth 24 can be suppressed and irregularities at the meshing position between the worm tooth 17 and the wheel tooth 24 are suppressed regardless of dimensional errors, assembly errors of members constituting the worm reduction gear, wear of the tooth flanks of the wheel tooth 24 and the worm tooth 17, and the like. That is, when the dimensional errors and the assembly errors occur in each of the members constituting the worm reduction gear, or the tooth flanks of wheel tooth 24 and worm tooth 17 wear out, based on the elasticity of the torsion coil spring 38, the tip end portion of the worm 14 is pressed toward the worm wheel 13 in the first direction D1 and the shift of the meshing position between the wheel tooth 24 and the worm tooth 17 is corrected. Therefore, in the worm reduction gear of this example, such dimensional errors and assembly errors can be effectively absorbed without particularly increasing the dimensional accuracy and assembly precision of each member constituting the worm reduction gear, and thus irregularities in the meshing position between the worm tooth 17 and the wheel tooth 24 are suppressed and the irregularities in the meshing position is prevented even when the tooth flank of the wheel tooth 24 wears out. As a result, generation of gear rattle noise at the meshing portion between the worm tooth 17 and the wheel tooth 24 is more effectively prevented.

On the contrary, in a structure of the related art illustrated in Fig. 7, it is necessary to sufficiently secure the dimensional accuracy and assembly precision of each member constituting the worm reduction gear 11 in order to adjust the force for elastically pressing the tip end portion of the worm 14 toward the worm wheel 13 in the first direction D1 to an appropriate magnitude by the torsion coil spring 23. Therefore, there is a possibility that the manufacturing cost of the worm reduction gear 11 may increase. That is, in the worm reduction gear 11 of the related art, the holder 19 is press-fitted into the worm accommodation portion 16 of the housing 12 and the outer ring of the rolling bearing 18a on the tip end side is press-fitted into the holder 19. The inner ring of the rolling bearing 18a on the tip end side is externally fitted to a bush 21 without a gap and the bush 21 is externally fitted to a large diameter portion 20 of the worm 14 via a fine gap in a radial direction. The torsion coil spring 23 is provided between a preload pad 22 press-fitted to the tip end portion of the worm 14 and the holder 19, and the tip end portion of the worm 14 is elastically pressed toward the worm wheel 13 in the first direction D1 by the torsion coil spring 23, thereby suppressing the backlash. Therefore, when the radial dimension of the fine gap in the radial direction varies due to the dimensional errors or the assembly errors of each member constituting the worm reduction gear 11, there is a possibility that the force for elastically pressing the tip end portion of the worm 14 toward the worm wheel 13 cannot be adjusted to an appropriate magnitude.

In this example, the center axis O₅₀ of the guide-side held surface 50 which is the outer peripheral surface of the guide member 37 is eccentric with respect to the center axis O₄₈ of the guide-side holding surface 48 which is the inner peripheral surface of the guide member 37 and internally fits and holds the holder member 36. In addition, the eccentric direction of the center axis O₄₂ of the holder-side held surface 42 with respect to the center axis O₄₀ of the holder-side holding surface 40 and the eccentric direction of the center axis O₅₀ of the guide-side held surface 50 with respect to the center axis O₄₈ of the guide-side holding surface 48 are set to be opposite to each other, and the amount of eccentricity of the center axis O₄₂ of the holder-side held surface 42 with respect to the center axis O₄₀ of the holder-side holding surface 40 and the amount of eccentricity of the center axis O₅₀ of the guide-side held surface 50 with respect to the center axis O₄₈ of the guide-side holding surface 48 are set to be the same. Therefore, even when the holder member 36 rotates with respect to the guide member 37, the rolling bearing 18c on the tip end side can be disposed substantially at the center position with respect to the second direction D2 (right-left direction in Figs. 2, 3 and 5) which is a direction parallel with the axial direction of the worm wheel 13.

In this example, when the meshing reaction force is applied to the worm 14 from the meshing portion between the worm tooth 17 and the wheel tooth 24 during operation of the worm reduction gear, based on the existence of the gap in a portion located at the end portion far from the worm wheel 13 in the first direction D1 among the gaps existing between the guide-side held surface 50 and the guide holding portion 25, the tip end portion of the worm 14 displaces in a direction away from the worm wheel 13 in the first direction D1 while elastically squeezing the leaf spring 39. As a result, the meshing state between the wheel tooth 24 and the worm tooth 17 is properly maintained. Also, in this example, when the operation of the worm reduction gear is stopped and the meshing reaction force is not applied from the meshing portion to the worm 14, the worm 14 is pressed toward the worm wheel 13 in the first direction D1 by the leaf spring 39, and the worm 14 returns to the original position. That is, the guide-side held surface 50 and the guide holding portion 25 abut at a portion where the phase in the circumferential direction coincides with that of the meshing portion between the worm tooth 17 and the wheel tooth 24. Therefore, the gap in the portion located at the end portion far from the worm wheel 13 in the first direction D1 among the gaps existing between the guide-side held surface 50 and the guide holding portion 25 can be maintained for a long period.

The worm tooth 17 is helically formed on the outer peripheral surface of the axial intermediate portion of the worm 14. Therefore, when the worm 14 is rotationally driven and a driving force is transmitted from the worm 14 to the worm wheel 13, a meshing reaction force including components not only in the axial direction of the worm 14 and the first direction D1 but also in the second direction D2 is applied from the worm wheel 13 to the worm 14. In this example, a part of the guide-side held surface 50, which is a portion of which the phase in the circumferential direction coincides with the meshing portion, is in contact with the inner circumferential surface of the guide holding portion 25 in a state where no meshing reaction force is applied from the meshing portion between the worm tooth 17 and the wheel tooth 24 to the worm 14 and the guide member 37 is elastically urged toward the worm wheel 13 by the leaf spring 39. Therefore, when the rotation direction of the output shaft of the electric motor 10 changes, displacement of the tip end portion of the worm 14 in the second direction D2 is suppressed to be small as compared with a case of the structure illustrated in Fig. 7. As a result, it is possible to more reliably suppress the generation of the gear rattle noise at the meshing portion.

Further, the gap in the portion located at the end portion far from the worm wheel 13 in the first direction D1 among the gaps existing between the guide-side held surface 50 and the guide holding portion 25 is maintained by the balance of two spring load characteristics between the torsion coil spring 38 and the leaf spring 39.

In this case, the preload is also applied to the rolling bearing 18c by the spring loads of the torsion coil spring 38 and the leaf spring 39, which are applied during operation of the worm reduction gear. That is, as a moving distance by the urging mechanism 35 in the first direction D1 increases, the adjustment of the gap is switched from the adjustment by the spring load of the leaf spring 39 to the adjustment by the spring load of the torsion coil spring 38. Therefore, when the moving distance of the urging mechanism 35 in the first direction D1 is short, the preload of the rolling bearing 18c is mainly performed by the leaf spring 39. When the moving distance of the urging mechanism 35 in the first direction D1 is long, the preload of the rolling bearing 18c is mainly performed by the torsion coil spring 38.

The amount by which the tip end portion of the worm 14 can be displaced in the first direction D1 depends on the radial dimension of the gap in the portion located at the end portion on a side far from the worm wheel 13 in the first direction D1 among the gaps existing between the guide-side held surface 50 and an inner peripheral surface of the guide holding portion 25. The management (adjustment) of the radial dimension can be carried out relatively easily as compared with a case of managing the size of the minute gap provided all around the circumference between the outer peripheral surface of the large diameter portion 20 and the inner peripheral surface of bush 21 as in the structure of the related art illustrated in Fig. 7. That is, in the structure of the related art, when the meshing position between the worm tooth 17 and the wheel tooth 24 varies or the assembly error of the holder 19 with respect to the housing 12 becomes large due to dimensional errors and assembly errors of the worm 14 and the worm wheel 13, there is a possibility to be difficult to secure the radial dimension of the minute gap in a portion located at the end portion on the side far from the worm wheel 13 in the first direction D1 among the minute gaps described above. On the contrary, in this example, securing the radial dimension of the gap in the portion located at the end portion on the side far from the worm wheel 13 in the first direction D1 among the gaps described above can be achieved by adjusting the assembly position of the guide member 37 with respect to the guide holding portion 25. Therefore, it is relatively easy to ensure the amount by which the tip end portion of the worm 14 can be displaced in the first direction D1, and the increase in the manufacturing cost of the worm reduction gear can be suppressed.

In this example, since the spring constant of the leaf spring 39 is set to be sufficiently small, the change in the meshing resistance at the meshing portion can be reduced regardless of the change in the distance between the center axes of the worm wheel 13 and the worm 14 due to rotation speeds of the worm wheel 13 and the worm 14, a magnitude of the torque transmitted at the meshing portion between the worm tooth 17 and the wheel tooth 24, and the temperature change in the housing 12a.

Further, in this example, the torsion coil spring 38 is provided near the inner diameter-side tube portion 47 which is provided to extend from the outer peripheral edge of the side plate portion 46 of the guide member 37 to the other axial side. That is, the torsion coil spring 38 is installed on the worm wheel 13 out of both axial sides of the rolling bearing 18c on the tip end side. Therefore, the axial dimension of the worm accommodation portion 16a of the housing 12a can be kept small, and thus it is easy to reduce the size and weight of the worm reduction gear.

### DESCRIPTION OF REFERENCE NUMERALS AND SIGNS

1: steering wheel
2: steering gear unit
3: input shaft
4: tie rod
5: steering shaft
6: steering column
7: universal joint
8: intermediate shaft
9: universal joint
10: electric motor
11: worm reduction gear
12, 12a: housing
13: worm wheel
14: worm
15: wheel accommodation portion
16, 16a: worm accommodation portion
17: worm tooth
18a to 18c: rolling bearing
19: holder
20: large diameter portion
21: bush
22: preload pad
23: torsion coil spring
24: wheel tooth
25: guide holding portion
26: bearing fitting portion
27: housing-side step portion
28: outer ring
29: retaining ring
30: small diameter portion
31: worm-side step portion
32: inner ring
33: elastic body
34: nut
36: holder member
37: guide member
38: torsion coil spring
39: leaf spring
40: holder-side holding surface
41: recess portion
42: holder-side held surface
43: holder-side marker portion
44: displacement-side pin portion
45: outer diameter-side tube portion
46: side plate portion
47: inner diameter-side tube portion
48: guide-side holding surface
49: guide-side marker portion
50: guide-side held surface
51: notch portion
52: holding pin portion
53: slit
54: housing-side engagement portion
55: through hole
56: stationary-side pin portion
57: positioning convex portion
58: coil portion
59a, 59b: arm portion
60: base portion
61: arm portion
62: cover
63: inward flange portion

## Claims

1. A worm reduction gear, comprising:
a housing (12a) which includes a guide holding portion (25);
a worm wheel (13) which includes a wheel tooth (24);
a worm (14) which includes a worm tooth (17) meshing with the wheel tooth (24);
a bearing (18c) which is externally fitted to a tip end portion of the worm (14);
a holder member (36) which includes a holder-side holding surface (40) for internally fitting and holding the bearing (18c) and a holder-side held surface (42) eccentric to a center axis (O₄₀) of the holder-side holding surface (40);
a guide member (37) including a guide-side holding surface (48) for internally fitting and holding the holder member (36) to be capable of swinging about a center axis (O₄₂) of the holder-side held surface (42), and is internally fitted and held into the guide holding portion (25);
a first elastic urging member (38) for elastically urging the tip end portion of the worm (14) toward the worm wheel (13) by elastically urging the holder member (36) in a direction to rotate with respect to the guide member (37);
wherein:
an outer peripheral surface of the guide member (37) has a cylindrical surface shape and is eccentric with respect to a center axis (O₄₈) of the guide-side holding surface (48);
an eccentric direction of a center axis (O₄₂) of the holder-side held surface (42) with respect to a center axis (O₄₀) of the holder-side holding surface (40) and an eccentric direction of a center axis of an outer peripheral surface of the guide member with respect to a center axis (O₄₈) of the guide-side holding surface (48) are opposite to each other;
an amount of eccentricity of the center axis (O₄₂) of the holder-side held surface (42) with respect to the center axis (O₄₀) of the holder-side holding surface (40) and an amount of eccentricity of the center axis (O₅₀) of an outer peripheral surface of the guide member with respect to the center axis (O₄₈) of the guide-side holding surface (48) are the same;
**characterized in that**
the first elastic urging member (38) is disposed on the worm wheel side out of both axial side portions of the bearing (18c).

2. The worm reduction gear according to claim 1, wherein
the first elastic urging member (38) is a torsion coil spring.

3. The worm reduction gear according to claim 1 or claim 2, further comprising:
a second elastic urging member (39) for elastically urging the guide member (37) toward the worm wheel (13).

4. The worm reduction gear according to claim 3, wherein
the second elastic urging member (39) is a leaf spring.

5. The worm reduction gear according to claim 3 or claim 4, wherein
a preload is applied to the bearing (18c) by spring loads of the first elastic urging member (38) and the second elastic urging member (39) which act during operation of the worm reduction gear.

6. The worm reduction gear according to any one of claims 1 to 5, wherein
rotation of the guide member (37) relative to the housing (12a) is restricted by concavo-convex engagement of a housing-side engagement portion (54) provided in the housing (12a) with a guide-side engagement portion provided in the guide member (37).

## Patentansprüche

1. Schneckenreduktionsgetriebe, umfassend:
ein Gehäuse (12a), das einen Führungshalteabschnitt (25) umfasst;
ein Schneckenrad (13), das eine Radverzahnung (24) umfasst;
eine Schnecke (14), die eine Schneckenverzahnung (17) umfasst, die mit der Radverzahnung (24) in Zahnradeingriff steht;
ein Lager (18c), das außen an einem Endabschnitt der Schnecke (14) angebracht ist;
ein Halterungselement (36), das eine halterungsseitige Haltefläche (40) zum innenseitigen Einpassen und Halten des Lagers (18c) und eine halterungsseitige gehaltene Fläche (42) umfasst, die zu einer Mittelachse (O₄₀) der halterungsseitigen Haltefläche (40) exzentrisch ist;
wobei ein Führungselement (37) eine führungsseitige Haltefläche (48) zum innenseitigen Einpassen und Halten des Halterungselements (36) umfasst, um dazu in der Lage zu sein, um eine Mittelachse (O₄₂) der halterungsseitigen gehaltenen Fläche (42) zu schwingen, und innenseitig in den Führungshalteabschnitt (25) eingepasst ist und darin gehalten wird;
ein erstes elastisches Zwangsbewegungselement (38) zum elastischen Zwangsbewegen des Endabschnitts der Schnecke (14) in Richtung des Schneckenrads (13) durch elastisches Zwangsbewegen des Halterungselements (36) in eine Richtung, um sich in Bezug auf das Führungselement (37) zu drehen;
wobei:
eine äußere Umfangsoberfläche des Führungselements (37) eine zylindrische Oberflächenform aufweist und in Bezug auf eine Mittelachse (O₄₈) der führungsseitigen Haltefläche (48) exzentrisch ist;
eine exzentrische Richtung einer Mittelachse (O₄₂) der halterungsseitigen gehaltenen Fläche (42) in Bezug auf eine Mittelachse (O₄₀) der halterungsseitigen Haltefläche (40) und eine exzentrische Richtung einer Mittelachse einer äußeren Umfangsoberfläche des Führungselements in Bezug auf eine Mittelachse (O₄₈) der führungsseitigen Haltefläche (48) einander entgegengesetzt sind;
ein Ausmaß der Exzentrik der Mittelachse (O₄₂) der halterungsseitigen gehaltenen Fläche (42) in Bezug auf die Mittelachse (O₄₀) der halterungsseitigen Haltefläche (40) und ein Ausmaß der Exzentrik der Mittelachse (O₅₀) einer äußeren Umfangsoberfläche des Führungselements in Bezug auf die Mittelachse (O₄₈) der führungsseitigen Haltefläche (48) gleich sind;
**dadurch gekennzeichnet, dass**:
das erste elastische Zwangsbewegungselement (38) von den beiden axialen Seitenabschnitten des Lagers (18c) auf der Schneckenradseite angeordnet ist.

2. Schneckenreduktionsgetriebe nach Anspruch 1, wobei:
das erste elastische Zwangsbewegungselement (38) eine Torsionsspulenfeder ist.

3. Schneckenreduktionsgetriebe nach Anspruch 1 oder Anspruch 2, das ferner Folgendes umfasst:
ein zweites elastisches Zwangsbewegungselement (39) zum elastischen Zwangsbewegen des Führungselements (37) in Richtung des Schneckenrads (13).

4. Schneckenreduktionsgetriebe nach Anspruch 3, wobei:
das zweite elastische Zwangsbewegungselement (39) eine Blattfeder ist.

5. Schneckenreduktionsgetriebe nach Anspruch 3 oder 4, wobei:
das Lager (18c) durch Federbelastungen des ersten elastischen Zwangsbewegungselements (38) und des zweiten elastischen Zwangsbewegungselements (39), die während des Betriebs des Schneckenreduktionsgetriebe wirken, mit einer Vorbelastung beaufschlagt wird.

6. Schneckenreduktionsgetriebe nach einem der Ansprüche 1 bis 5, wobei:
eine Drehung des Führungselements (37) relativ zu dem Gehäuse (12a) durch einen Konkav-Konvex-Eingriff eines gehäuseseitigen Eingriffsabschnitts (54), der in dem Gehäuse (12a) bereitgestellt ist, mit einem führungsseitigen Eingriffsabschnitt, der in dem Führungselement (37) bereitgestellt ist, eingeschränkt ist.

## Revendications

1. Réducteur de vitesse à vis sans fin, comprenant :
un boîtier (12a) qui inclut une partie de support de guide (25) ;
une roue à vis sans fin (13) qui inclut une dent de roue (24) ;
une vis sans fin (14) qui inclut une dent de vis sans fin (17) engrenant avec la dent de roue (24) ;
un palier (18c) qui est ajusté extérieurement à une partie d'extrémité de pointe de la vis sans fin (14) ;
un élément support (36) qui inclut une surface de support côté support (40) pour ajuster et supporter intérieurement le palier (18c) et une surface de support côté support (42) excentrique par rapport à un axe central (O₄₂) de la surface de support côté support (40) ;
un élément guide (37) incluant une surface de support côté guide (48) pour ajuster et supporter intérieurement l'élément support (36) pour être capable de pivoter autour d'un axe central (O₄₂) de la surface de support côté support (42), et est ajusté et supporté intérieurement dans la partie de support de guide (25) ;
un premier élément de sollicitation élastique (38) pour solliciter de manière élastique la partie d'extrémité de pointe de la vis sans fin (14) vers la roue à vis sans fin (13) en sollicitant de manière élastique l'élément de support (36) dans une direction pour tourner par rapport à l'élément guide (37) ;
dans lequel :
une surface périphérique extérieure de l'élément guide (37) présente une forme de surface cylindrique et est excentrique par rapport à un axe central (O₄₈) de la surface de support côté guide (48) ;
une direction excentrique d'un axe central (O₄₂) de la surface de support côté support (42) par rapport à un axe central (0₄₀) de la surface de support côté support (40) et une direction excentrique d'un axe central d'une surface périphérique extérieure de l'élément guide par rapport à un axe central (O₄₈) de la surface de support côté guide (48) sont opposées l'une à l'autre ;
une quantité d'excentricité de l'axe central (O₄₂) de la surface de support côté support (42) par rapport à l'axe central (O₄₀) de la surface de support côté support (40) et une quantité d'excentricité de l'axe central (O₅₀) d'une surface périphérique extérieure de l'élément guide par rapport à l'axe central (O₄₈) de la surface de support côté guide (48) sont identiques ;
**caractérisé en ce que**
le premier élément de sollicitation élastique (38) est disposé sur le côté roue à vis sans fin à l'extérieur des deux parties latérales axiales du palier (18c).

2. Réducteur de vitesse à vis sans fin selon la revendication 1, dans lequel le premier élément de sollicitation élastique (38) est un ressort hélicoïdal de torsion.

3. Réducteur de vitesse à vis sans fin selon la revendication 1 ou la revendication 2, comprenant :
un second élément de sollicitation élastique (39) destiné à solliciter de manière élastique l'élément guide (37) vers la roue à vis sans fin (13).

4. Réducteur de vitesse à vis sans fin selon la revendication 3, dans lequel
le second élément de sollicitation élastique (39) est un ressort à lame.

5. Réducteur de vitesse à vis sans fin selon la revendication 3 ou la revendication 4, dans lequel
une précharge est appliquée au palier (18c) par des charges élastiques du premier élément de sollicitation élastique (38) et du deuxième élément de sollicitation élastique (39) qui agissent pendant un fonctionnement du réducteur de vitesse à vis sans fin.

6. Réducteur de vitesse à vis sans fin selon l'une quelconque des revendications 1 à 5, dans lequel
une rotation de l'élément guide (37) par rapport au boîtier (12a) est limitée par la mise en prise concavo-convexe d'une partie de mise en prise côté boîtier (54) prévue dans le boîtier (12a) avec une partie de mise en prise côté guide prévue dans l'élément guide (37).
